# EUROPÄISCHE PATENTSCHRIFT

(11) **EP 1 173 743 B1**
(45) Veröffentlichungstag und Bekanntmachung des Hinweises auf die Patenterteilung: **19.01.2005**
(21) Anmeldenummer: 00929260.8
(22) Anmeldetag: 29.03.2000
(51) Int. Cl.: G01M 17/06, B66F 7/10

(54) **DYNAMISCHE PRÜFEINRICHTUNG FÜR EIN KRAFTFAHRZEUG, PRÜFSTAND UND FERTIGUNGSLINIE MIT DYNAMISCHER PRÜFEINRICHTUNG, UND BEVORZUGTE VERWENDUNGEN DERSELBEN ZUR ÜBERPRÜFUNG EINES KIPPSICHERUNGSSYSTEMS IN EINEM KRAFTFAHRZEUG**
DYNAMIC TEST FIXTURE FOR A MOTOR VEHICLE, TEST STAND AND PRODUCTION LINE WITH A DYNAMIC TEST FIXTURE AND PREFERRED USES OF SAME FOR TESTING A STABILIZING SYSTEM OF A MOTOR VEHICLE
DISPOSITIF D'ESSAI DYNAMIQUE DESTINE A UN VEHICULE AUTOMOBILE, BANC D'ESSAI ET CHAINE DE PRODUCTION POURVUS DE DISPOSITIF D'ESSAI DYNAMIQUE ET UTILISATIONS PREFEREES DE CEUX-CI POUR LE CONTROLE D'UN SYSTEME STABILISATEUR DANS UN VEHICULE AUTOMOBILE

(30) Priorität: 31.03.1999 DE 19914820
(43) Veröffentlichungstag der Anmeldung: 23.01.2002
(73) Patentinhaber: SIEMENS AKTIENGESELLSCHAFT, 80333 München (DE); AUDI AG, 85045 Ingolstadt (DE)
(72) Erfinder: Flaig, Bernhard, D-85114 Buxheim (DE); Knupfer, Götz, D-85088 Vohburg (DE); Lenzen, Sascha, D-51674 Wiehl (DE); Seyberth, Karl, D-91171 Greding (DE); Wittig, Gero, D-85057 Ingolstadt (DE); Wolfrum, Klaus, D-91052 Erlangen (DE)
(74) Vertreter: Berg, Peter, Dipl.-Ing.
(86) Internationale Anmeldenummer: PCT/DE2000/000957
(87) Internationale Veröffentlichungsnummer: WO 2000/060330

(56) Entgegenhaltungen:
- FR-A- 2 677 155
- FR-A- 2 764 008

## Beschreibung

Dynamische Prüfeinrichtung für ein Kraftfahrzeug, Prüfstand und Fertigungslinie mit dynamischer Prüfeinrichtung, und bevorzugte Verwendungen derselben zur Überprüfung eines Kippsicherungssystems in einem Kraftfahrzeug

Moderne Kraftfahrzeuge weisen zunehmend elektronische Sicherungssysteme auf, womit die Gebrauchseigenschaften und vor allem die Gebrauchssicherheit verbessert wird. Als Beispiele hierfür sollen genahnt werden das Antiblockiersystem, welches auf die Bremsen eines Fahrzeuges ("ABS"-System) einwirkt und die Antischlupfregelung ("ASR"-System), welche auf den Antrieb eines Fahrzeuges einwirkt. Als eine weitere wichtige Systemkomponente werden beim Bau von Kraftfahrzeugen zunehmend Kippsicherungssysteme eingesetzt, welche ein Kippen bzw. Überschlagen des Fahrzeuges insbesondere bei extremen Kurvenfahrten verhindern soll. Derartige Systeme werden auch als Elektronisches Stabilitätsprogramm ("ESP"- Einrichtung) bezeichnet und bewirken gezielt die Abbremsung eines Rades, falls das Kraftfahrzeug bei extremen Fahrmanövern in eine starke Schräglage bzw. eine Drehung geraten sollte.

Zur Qualitätssicherung ist es insbesondere bei Sicherheitseinrichtungen erforderlich, deren Funktionsfähigkeit im eingebauten Zustand im Kraftfahrzeug z.B. im Rahmen von dessen Endkontrolle zu prüfen. Dabei tritt das besondere Problem auf, daß bislang keine geeigneten Vorrichtungen zur Verfügung stehen, um ein Kippsicherungssystem in einem fertigen montierten und Auslieferung an einen Kunden vorgesehenen Kraftfahrzeug zu überprüfen. Die Prüfung betrifft dabei insbesondere die Funktionsfähigkeit von Lage- und/oder Beschleunigungssensoren, welche im Fahrzeug eingebaut sind, und deren ordnungsgemäßen Anschluß an eine Steuerungselektronik.

Aus der DE 21 65 244 ist eine Einrichtung zum Heben und Kippen von Fahrzeugen bekannt. Diese weist eine Hebekonstruktion mit einem anhebbaren Teil auf, der beim Hebevorgang auf den Boden des Fahrzeuges einwirkt. Die Hebekonstruktion ermöglicht eine Kippung des angehobenen Fahrzeugs um dessen Querachse.

Aus der EP 0 378 743 ist ebenfalls eine Vorrichtung zum Heben von Fahrzeugen bekannt. Die Vorrichtung weist Führungsschienen auf, über die das Fahrzeug über der Hebevorrichtung plaziert werden kann. Beim Hebevorgang wirkt die Vorrichtung ebenfalls auf den Fahrzeugboden ein, während die Führungsschienen abgesenkt werden können. Die Hebekonstruktion ermöglicht eine Kippung des angehobenen Fahrzeugs um dessen Quer und Längsachse.

Aus der WO 96/26152 ist eine Vorrichtung zum Instandsetzen von Fahrzeugkarosserien bekannt. Dabei wird das Fahrzeug über eine Rampe über einem Tragrahmen positioniert. Beim Hebevorgang wirkt der Tragrahmen auf den Fahrzeugboden ein und ermöglicht eine Kippung des angehobenen Fahrzeugs um dessen Quer und Längsachse.

Aus der DE 31 44 621 ist eine Hebevorrichtung für ein Kraftfahrzeug bekannt, welche in Form eines Förderwagens ausgeführt ist. Diese wirkt beim Hebevorgang ebenfalls auf den Fahrzeugboden ein.

Die aus dem Stand der Technik bekannten Hebevorrichtungen sind stationärer Art, d.h. dienen zu Positionierung eines Fahrzeugs in einem angehobenen Zustand. Sie haben den Zweck, ein Fahrzeug in eine Position zu bringen, um Wartungs- und Reparaturarbeiten auszuführen. Zu deren Ausführung muß das Fahrzeug in aller Regel für einen nicht unerheblichen Zeitraum in der angehobenen und gegebenenfalls geneigten Position ruhend gehalten werden. Bewegungen des Fahrzeugs würden die Ausführung der Arbeiten beeinträchtigen.

Demgegenüber liegt der Erfindung die Aufgabe zu Grunde, eine dynamische Prüfeinrichtung für ein Fahrzeug anzugeben, womit das Fahrzeug nur vorübergehend in Positionen bringbar ist, welche von den während des normalen Gebrauchs üblicherweise auftretenden Positionen abweichen. Solche Lagen sind an sich unerwünscht und treten z.B. nur in Unfallsituationen auf. Der Erfindung liegt ferner die Aufgabe zu Grunde, einen besonders in einer automatischen Fertigungseinrichtung für Kraftfahrzeuge einsetzbaren Prüfstand anzugeben, welcher eine derartige dynamische Prüfeinrichtung aufweist. Die dynamische Prüfeinrichtung soll zudem besonders geeignet sein zur Überprüfung eines im Kraftfahrzeug eingebauten elektronischen Kippsicherungssystems.

Die Aufgabe wird gelöst mit der im Anspruch 1 angegebenen dynamischen Prüfeinrichtung. Vorteilhafte Ausführungsformen der Erfindung sind in den folgenden Unteransprüchen enthalten. Die weitere Aufgabe wird mit dem im Anspruch 14 angegebenen Prüfstand gelöst. Vorteilhafte Ausführungsformen hierzu sind in den folgenden Unteransprüchen enthalten. Schließlich sind in weiteren Unteransprüchen vorteilhafte Verwendungen der dynamischen Prüfeinrichtung und des Prüfstandes angegeben.

Die erfindungsgemäße dynamische Prüfeinrichtung für ein Fahrzeug weist ein Traggestell auf, dessen Abmessungen des in Richtung einer Querachse des Fahrzeuges kleiner sind als dessen Radabstand. Hierdurch ist es z.B. möglich, das Fahrzeug z.B. in einer Fertigungseinrichtung vollautomatisch über das Traggestell zu fördern. Erfindungsgemäß weist die dynamische Prüfeinrichtung eine steuerbare Verstelleinrichtung für das Traggestell auf. Diese wiederum weist auf erste Mittel, welche das Traggestell von unten an das Fahrzeug einfahren, dieses in eine angehobene Prüfposition bringen und nach Ablauf einer Prüfung wieder absetzen, zweite Mittel, welche so auf das Traggestell einwirken, daß das in einer angehobenen Prüfposition befindliche Fahrzeug kurzzeitig in mindestens einer von der horizontalen Lage abweichende Lage positioniert ist, und dritte Mittel, welche so auf das Traggestell einwirken, daß das in einer angehobenen Prüfposition befindliche Fahrzeug kurzzeitig um eine Vertikalachse gedreht wird.

Dabei kann die Reihenfolge der Einwirkung der zweiten und dritten Mittel der steuerbaren Verstelleinrichtung auf das Fahrzeug anwendungsabhängig vorgegeben werden. So ist es z.B. einstellbar, das zunächst die zweiten Mittel das Fahrzeug kurzzeitig in mindestens einer von der horizontalen Lage abweichenden Lage positionieren. Nachdem sich das Fahrzeug dann wieder in der horizontalen Lage befindet, greifen die dritten Mittel ein und drehen das Fahrzeug kurzzeitig um eine Vertikalachse. Bei Bedarf kann die Reihenfolge des Eingriffes der zweiten und dritten Mittel auch ausgetauscht werden. Das Fahrzeug würde dann erst gedreht und anschließend gekippt werden. Schließlich ist es auch möglich, das die zweiten und dritten Mittel der steuerbaren Verstelleinrichtung simultan auf das Traggestell einwirken. Das Fahrzeug würde in diesem Fall sowohl in zumindest einer Lage positioniert werden, welche von der horizontalen Lage abweicht, als auch gleichzeitig um die Vertikalachse gedreht werden.

Die Erfindung wird desweiteren anhand der in den nachfolgend kurz angeführten Figuren dargestellten Ausführungsbeispiele weiter erläutert. Dabei zeigt
- FIG 1: eine erste Ausführung einer dynamischen Prüfeinrichtung gemäß der Erfindung mit einem schematisch dargestellten Fahrzeug in einer perspektivischen Ansicht,
- FIG 2: eine erste Ausführung für einen Prüfstand mit einer dynamischen Prüfeinrichtung gemäß Figur 1 in einer perspektivischen Ansicht,
- FIG 3: eine zweite Ausführung für einen Prüfstand mit einer dynamischen Prüfeinrichtung gemäß Figur 1 in einer perspektivischen Ansicht, und
- FIG 4: eine zweite Ausführung einer dynamischen Prüfeinrichtung gemäß der Erfindung in einer perspektivischen Ansicht,
- FIG 5: die zweite Ausführung der dynamischen Prüfeinrichtung gemäß Figur 4 in einer schematischen Draufsicht.

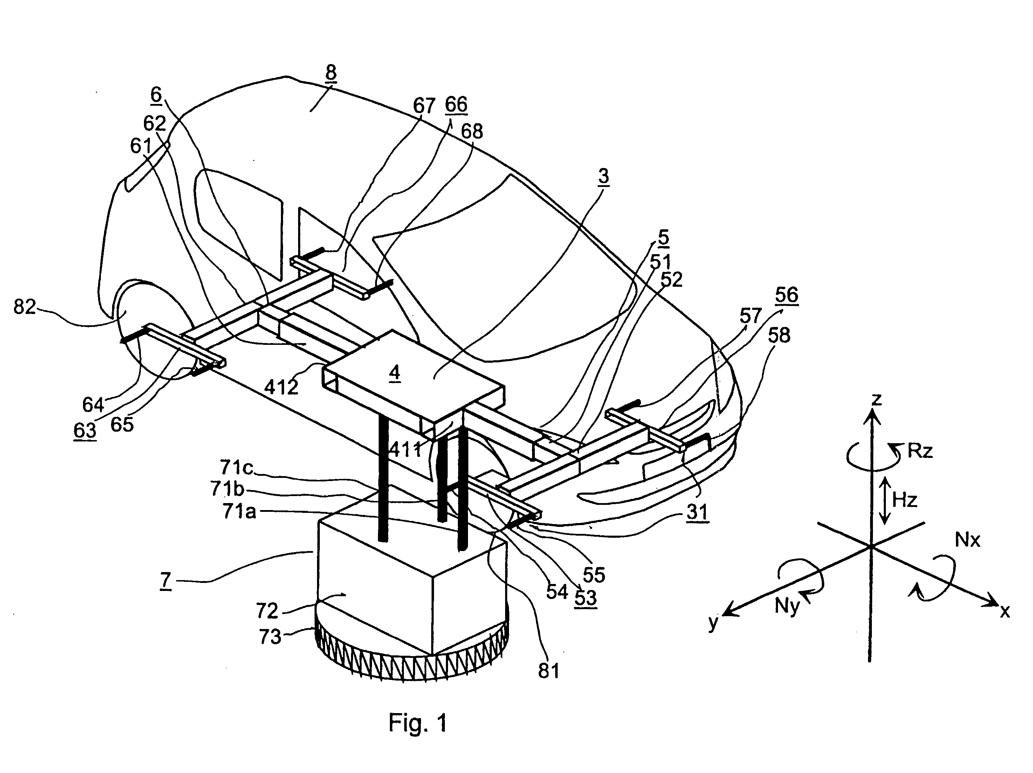

Figur 1 zeigt schematisch ein Fahrzeug 8, welches von einer besonders vorteilhaften Ausführung einer dynamischen Prüfeinrichtung gemäß der Erfindung erfaßt ist. Die dynamische Prüfeinrichtung weist ein Traggestell 3 für das Fahrzeug 8 auf. Dabei sind die Abmessungen 31 der dynamischen Prüfeinrichtung in Richtung einer Querachse y des Fahrzeuges kleiner als dessen Radabstand. Dies hat den Vorteil, daß das Fahrzeug 8 zunächst über dem Traggestell 3 plaziert, und das Traggestell dann von unten an das Fahrzeug eingefahren werden kann. Bei einer ersten, in den Figuren nicht dargestellten Ausführung der Erfindung kann das Traggestell 3 beim Einfahren von unten mit dem Fahrzeug über dessen Bodenbereich in Kontakt treten. Die Erfindung wird nachfolgend unter Zuhilfenahme von Ausführungen erläutert, bei denen das Traggestell beim Einfahren von unten mit dem Fahrzeug über dessen Räder in Kontakt tritt.

Zum Antrieb des Traggestells 3 weist die erfindungsgemäße dynamische Prüfeinrichtung eine steuerbare Verstelleinrichtung 7 auf. Diese enthält erste Mittel, die das Traggestell 3 von unten an das Fahrzeug 8 einfahren und dieses in eine angehobene Prüfposition bringt. Entsprechend der Darstellung in Figur 1 wird das Fahrzeug vorteilhaft entlang einer Vertikalachse z um einen Hub Hz angehoben. Nun können zweite Mittel der steuerbaren Verstelleinrichtung 7 so auf das Traggestell 3 einwirken, daß das Fahrzeug 8 in zumindest einer Lagen positionierbar ist, welche von der horizontalen Lage abweichen. Die horizontale Lage ist in Figur 1 durch das Kreuz aus Längsachse x und Querachse y dargestellt. Bei einer abweichenden Lage handelt es sich bevorzugt um Kippungen des Fahrzeuges entlang der Querachse, d.h. um Neigungen nach vorne oder nach hinten, bzw. um Kippungen des Fahrzeuges entlang der Längsachse, d.h. um seitliche Neigungen. Schließlich wirken dritte Mittel der steuerbaren Verstelleinrichtung 7 so auf das Traggestell 3 einwirkt, daß das Fahrzeug 8 zusätzlich um eine Vertikalachse z gedreht wird.

Eine derartige dynamische Prüfeinrichtung ist besonders geeignet, um für die Überprüfung insbesondere der Sensoren eines Kippsicherungssystems ( ESP Einrichtung, d.h. elektronisches Stabilitätsprogramm ) in einem Kraftfahrzeug verwendet zu werden. Bei der Prüfung eines Kippsicherungssystems, welches in einem Kraftfahrzeug eingebaut ist, werden in der Praxis häufig drei Prüfschritte durchgeführt. Dabei wird in einem ersten Prüfschritt mit Hilfe der Positioniervorrichtung eine Neigung des Kraftfahrzeugs 8 um die Querachse y ausgeführt, wobei der Neigungswinkel Ny größer als plus und/oder minus 10,5° gegenüber der horizontalen Lage beträgt. Ferner wird in einem zweiten Prüfschritt mit Hilfe der Positioniervorrichtung eine Neigung des Kraftfahrzeugs 8 um die Längsachse x ausgeführt, wobei der Neigungswinkel Nx ebenfalls größer als plus und/oder minus 10,5° gegenüber der horizontalen Lage beträgt. Schließlich kann noch eine Drehung des Fahrzeugs um die Vertikalachse z erfolgen, wobei der Drehwinkel Rz in der Praxis mindestens 40° beträgt und bei einer Winkelgeschwindigkeit von etwa 10°/s durchlaufen wird.

Die Kippungen des Fahrzeugs um Querachse y und Längsachse x, und die Drehung um die Vertikalachse z können von der steuerbaren Verstelleinrichtung 7 getrennt voneinander, d.h. einzeln aufeinander folgend, durchgeführt werden. Bei einer anderen Ausführung der erfindungsgemäßen dynamischen Prüfeinrichtung ist es auch möglich, daß die einzelnen Lageveränderungen überlagert werden. In diesem Fall wirkt also die steuerbare Verstelleinrichtung 7 nach Ausführung des ersten Schrittes so auf das Traggestell 3 ein, daß das Fahrzeug 8 sowohl in Lagen positioniert wird, welche von der horizontalen Lage abweichen, als auch um die Vertikalachse z gedreht wird. Wird somit ein Fahrzeug sowohl um den Neigungswinkel Ny, als auch um den Neigungswinkel Nx gekippt und gleichzeitig um die Vertikalachse z gedreht, so kann ein Kippsicherungssystem in einem Fahrzeug schnell geprüft werden. Dies ist insbesondere bei schnell laufenden, automatischen Produktionseinrichtungen für Kraftfahrzeuge von Vorteil.

Bevorzugt ist die steuerbare Verstelleinrichtung 7 der erfindungsgemäßen dynamischen Prüfeinrichtung annähernd vertikal unter dem Traggestell 3 angeordnet und wirkt insbesondere im Schwerpunkt auf das Traggestell ein. Im Beispiel der Figur 1 weist die Verstelleinrichtung 7 einen Sockel 72 auf, welcher auf einer Horizontaldreheinheit 73 gelagert ist. Diese übernimmt im Beispiel der Figur 1 die Funktion der dritten Mittel. Hiermit kann die Verstelleinrichtung 7 gemeinsam mit einem darauf befindlichen Traggestell 3 und einem darauf ruhenden Fahrzeug 8 um die Vertikalachse z gedreht werden.

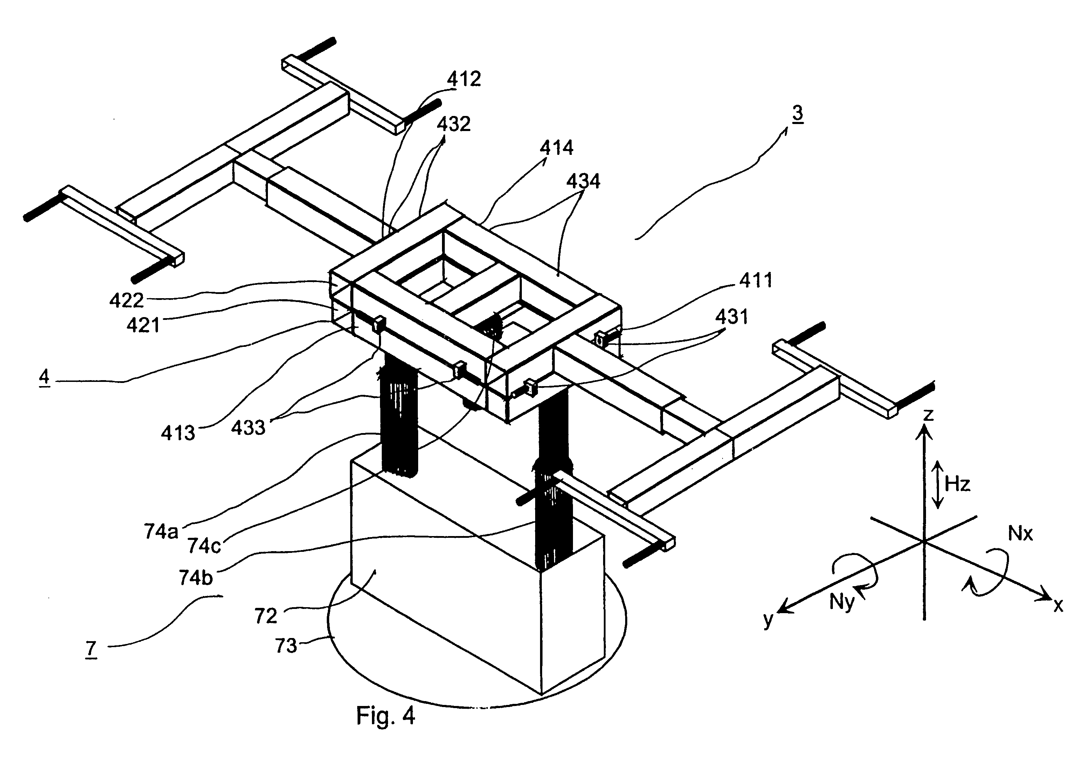

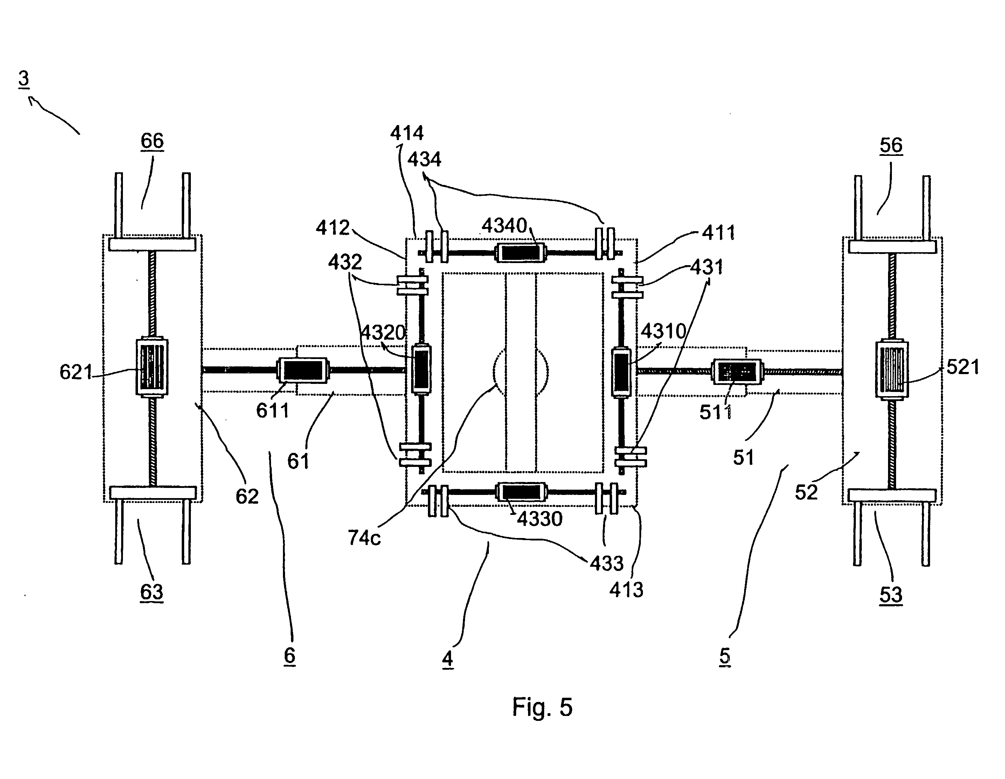

Zur Erzielung von Kippungen des Traggestells 3 um die Längsund Querachsen x,y weist die Verstelleinrichtung 7 im Beispiel der Figur 1 drei Verstelleinheiten 71a,71b,71c auf, welche bevorzugt in Form von Hubzylindern ausgeführt sind. Diese übernehmen im Beispiel der Figur 1 die Funktion der zweiten Mittel. Diese können so ausgefahren werden, daß das Traggestell 3 die oben beschriebenen und insbesondere zur Prüfung des Kippsicherungssystems eines Fahrzeuges erforderlichen Lageveränderungen ausführt. Bei einer Kippung des Fahrzeugs um die Querachse y müssen somit die Verstelleinheiten 71c,71b unverändert bleiben, während die Verstelleinheit 71a ein- und ausgefahren wird. Entsprechend muß bei einer Kippung des Fahrzeugs um die Längsachse x die Verstelleinheit 71a unverändert bleiben, während die Verstelleinheiten 71c,71b wechselseitig ein- und ausgefahren werden. Insbesondere abhängig vom Fahrzeuggewicht und von dynamischen Parametern wie z.B. die gewünschten Kipp- und Drehgeschwindigkeiten während einer Prüfung kann auch eine größere oder kleiner Anzahl an Verstelleinheiten vorhanden sein. An Hand der Figuren 4 und 5 wird eine weitere Möglichkeit der Erzielung von Lageänderungen erläutert werden.

Bei der in Figur 1 dargestellten Ausführung einer dynamischen Prüfeinrichtung gemäß der Erfindung weist das Traggestell 3 ein zentrales Tragteil 4 auf. Auf dieses wirkt die steuerbare Verstelleinrichtung 7 entlang einer Vertikalachse z über erste Mittel von unten ein, welche im Beispiel der Figur 1 in Form der Verstelleinheiten 71a,71b,71c ausgeführt sind. Vorteilhaft gehen von einer vorderen Stirnseite 411 des zentralen Tragteils 4 ein erster Tragarm 5 und von einer hinteren Stirnseite 412 des zentralen Tragteils 4 ein zweiter Tragarm 6 aus. Beide erstrecken sich entlang einer Längsachse x des Fahrzeuges 8 und können somit nahezu den gesamten Fahrzeugboden unterstützen. Vorteilhaft reichen die Tragarme 5,6 von zentralen Tragteil 4 bis zur Vorder- und Hinterachse des Fahrzeuges 8 und unterstützen dieses dort.

Bei der in Figur 1 dargestellten Ausführung der dynamischen Prüfeinrichtung weisen der erste und zweite Tragarm 5,6 jeweils einen entlang der Längsachse x des Fahrzeuges 8 einund ausfahrbaren Längsteleskoparm 51,61 auf. Bevorzugt an deren Ende befindet sich jeweils einen entlang der Querachse y des Fahrzeuges 8 ein- und ausfahrbarer Querteleskoparm 52,62. Über die Längsteleskoparme 51,61 kann die Ausladung der dynamischen Prüfeinrichtung vorteilhaft auf den Achsenabstand eines Fahrzeuges eingestellt werden, während die Querteleskoparme 52,62 eine Einstellung auf die Spurbreite des Fahrzeuges ermöglicht.

Das Traggestell 3 der in Figur 1 beispielhaft dargestellten dynamischen Prüfeinrichtung weist zudem Greifeinheiten 53,56,63,66 auf, die jeweils einem Rad des Fahrzeugs 8 zugeordnet sind und darauf zumindest zur Plazierung des Fahrzeugs 8 in einer angehobenen Position eingreifen. Vorteilhaft sind die Greifeinheiten an den äußeren Enden der ein- und ausfahrbaren Querteleskoparme der Tragarme angebracht. So sind im Beispiel der Figur 1 die Greifeinheiten 53,56 am Querteleskoparm 52 des ersten Tragarmes 5 angebracht und greifen auf die Räder an der Vorderachse des Fahrzeuges 8 ein. In Figur 1 ist das rechte Vorderrad 81 gezeigt, welches von der Greifeinheit 53 erfaßt ist. Ferner sind im Beispiel der Figur 1 die Greifeinheiten 63,66 am Querteleskoparm 62 des zweiten Tragarmes 6 angebracht und greifen auf die Räder an der Hinterachse des Fahrzeuges 8 ein. In Figur 1 ist das rechte Hinterrad 82 gezeigt, welches von der Greifeinheit 63 erfaßt ist.

Vorteilhaft weisen die Greifeinheiten aus- und einfahrbare Stützbolzen auf, welche entlang der Querachse des Fahrzeuges derart ausfahrbar sind, daß diese die Räder des Fahrzeugs untergreifen. Eine derartige Ausführung ist in Figur 1 bereits dargestellt. So weisen die Greifeinheiten 53,56,63 und 66 bevorzugt Paare von aus- und einfahrbare Stützbolzen 54,55 57,58 64,65 und 67,68 auf, Diese sind in Richtung der Querachse y des Fahrzeuges 8 derart ausfahrbar, daß diese die Räder 81,82 des Fahrzeugs 8 untergreifen. Eine derartige Anordnung hat den Vorteil, daß ein Fahrzeug auf einfache Weise, z.B. durch Eigenantrieb, über der dynamischen Prüfeinrichtung plaziert werden kann, und diese danach durch entsprechendes Ausfahren der Längsteleskoparme, Querteleskoparme und Stützbolzen auf die jeweiligen Abmessungen des Fahrzeuges eingestellt werden kann.

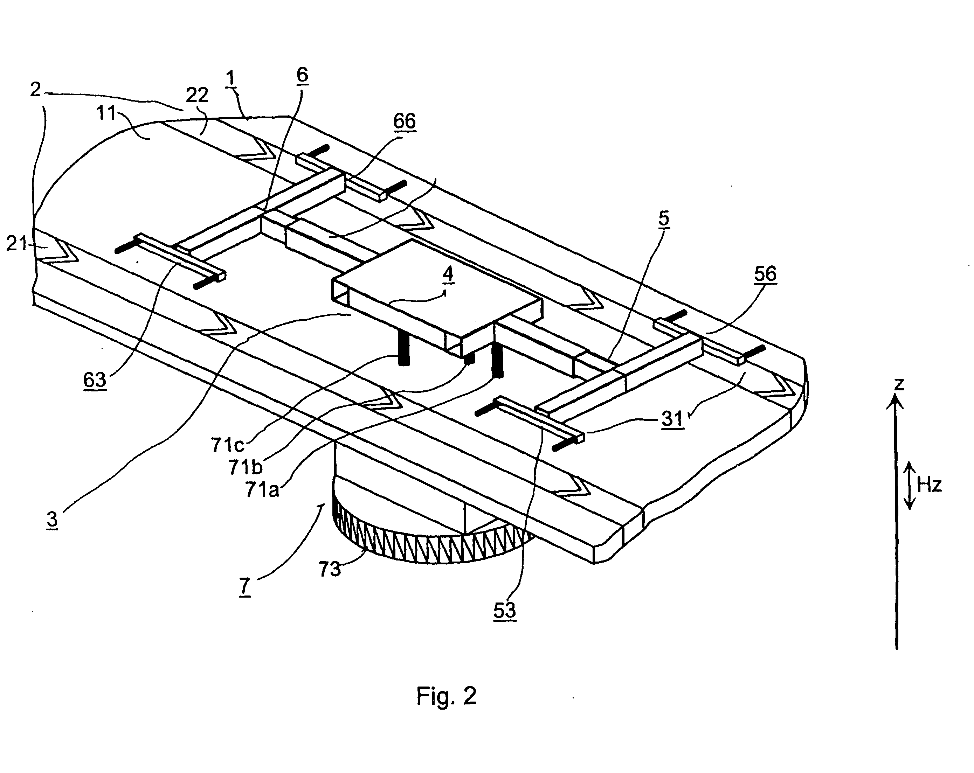

Dieser Vorteil ist auch an Hand der Darstellung von Figur 2 deutlich erkennbar. Dort ist eine erste Ausführung für einen Prüfstand in einer perspektivischen Ansicht gezeigt, welcher mit einer dynamischen Prüfeinrichtung gemäß Figur 1 ausgestattet ist, Der Prüfstand enthält eine Fördereinrichtung 2, welche auf einer Montageebene 1 angeordnet ist und womit ein Fahrzeug 8 automatisch zur dynamischen Prüfeinrichtung hinführbar, darauf plazierbar und davon wieder wegführbar ist. vorteilhaft weist die Fördereinrichtung 2 zwei parallele Förderbänder 21,22 auf, auf denen ein Fahrzeug 8 über dessen Rädern ruht. Das Fahrzeug kann damit ohne Eigenantrieb über der dynamischen Prüfeinrichtung 3 plaziert werden, welche im Raum 11 zwischen den Förderbänder 21,22 angeordnet ist. Nach Positionierung des Fahrzeuges kann die dynamische Prüfeinrichtung in der oben beschriebenen Weise durch entsprechendes Ausfahren der Längsteleskoparme und Querteleskoparme auf die jeweiligen Abmessungen des Fahrzeuges eingestellt werden. Durch das Ausfahren der Stützbolzen an den Köpfen der Greifeinheiten 53,56,63,66 werden die parallelen Förderbänder 21,22 überdeckt. Es ist nun möglich auf das Fahrzeug über dessen Räder durch Anhebung einzugreifen und dieses in die angehobene Prüfposition zu bringen.

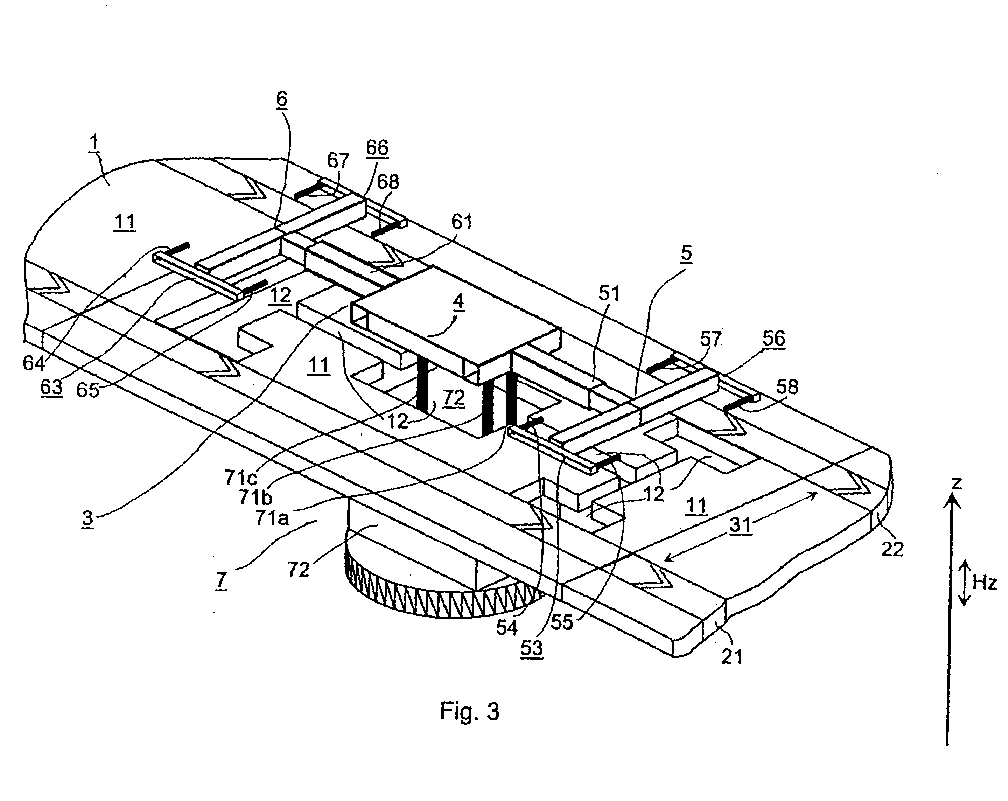

Figur 3 zeigt eine weitere Ausführungsform für einen Prüfstand. Dabei ist die dynamische Prüfeinrichtung in der Montageebene 1 zwischen den parallelen Förderbändern 21,22 der Fördereinrichtung 2 versenkbar. Die Montageebene weist hierzu vorteilhaft eine Vielzahl von Mulden auf, welche an die geometrische Struktur der dynamischen Prüfeinrichtung so angepaßt ist, daß insbesondere deren zentrales Tragteil 4 und die davon abgehenden Tragarme 5,6 in der Montageebene 1 versenkbar sind. Ferner befindet sich im Zentrum eine Öffnung, durch welche die Verstelleinheiten 71a,71b,71c der Verstelleinrichtung 7 hindurch greifen und auf das zentrale Tragteil 4 eingreifen können. Bei dem in Figur 3 dargestellten Zustand sind die Paare von Stützbolzen 54,55 57,58 64,65 und 67,68 an den kopfseitigen Enden der Greifeinheiten 53,56,63,66 noch nicht ausgefahren. Die Querabmessungen der dynamischen Prüfeinrichtung sind somit noch kleiner als der Radabstand eines Fahrzeuges und der Abstand 31 der beiden Förderbänder 21,22 der Fördereinrichtung.

Am Beispiel der Figuren 4 und 5 wird eine weitere, vorteilhafte Ausführung einer dynamischen Prüfeinrichtung gemäß der Erfindung erläutert. Dabei weist das zentrale Tragteil 4 ein unteres und ein oberes Rahmenteil 421,422 auf. Beide Rahmenteile liegen aufeinander und sind mit steuerbaren Verschlußmitteln so miteinander verbindbar, daß eine Kippung des oberen Rahmenteiles entlang einer Längs- oder Querachse des Fahrzeuges möglich ist. So sind an der vorderen, hinteren Stirnseite 411, 412 die Verschlußmittel 431, 432 und an der rechten, linken Längsseite 413, 414 die Verschlußmittel 433, 434 angebracht. Diese können einzeln so freigegeben und verriegelt werden, daß eine Kippung des oberen Rahmenteiles 422 entlang einer beliebig vorgegebenen Längs- oder Querachse x, y des Fahrzeuges möglich ist. Sind z.B. die Verschlußmittel 433 verriegelt und somit die beiden Rahmenteile an der rechten Längsseite 413 miteinander verbunden, während alle übrigen Verschlußmittel 431,432,434 freigegeben sind, so ist eine Kippung des oberen Rahmenteiles 422 und damit eines auf der dynamischen Prüfeinrichtung befindlichen Fahrzeuges um die Längsachse x, d.h. entgegen der Drehrichtung Nx möglich. Sind andererseits z.B. die Verschlußmittel 431 verriegelt und somit die beiden Rahmenteile an der vorderen Stirnseite 411 miteinander verbunden, während alle übrigen Verschlußmittel 432,433,434 freigegeben sind, so ist eine Kippung des oberen Rahmenteiles 422 und damit eines auf der dynamischen Prüfeinrichtung befindlichen Fahrzeuges um die Querachse y, d.h. in Drehrichtung Ny möglich. Vorteilhaft gehen bei dieser Ausführung der erste und der zweite Tragarm 5,6 gehen von der vorderen und hinteren Stirnseite 411,412 des oberen Rahmenteiles 422 des zentralen Tragteils 4 aus.

Zur Ausführung der oben beschriebenen Kippungen ist vorteilhaft eine dritte Hubeinheit 74c vorhanden, welche zwischen dem unteren und oberen Rahmenteil 421,422 des zentralen Tragteils 4 angeordnet ist. Die beiden unter dem zentralen Tragteil 4 in Figur 4 dargestellten Hubeinheiten 74a,74b bewirken bei dieser Ausführung nur eine Anhebung der dynamischen Prüfeinrichtung in die Prüfposition.

Figur 5 zeigt schließlich die zweite Ausführung der dynamischen Prüfeinrichtung gemäß der Figur 4 in einer schematischen Draufsicht. Dabei ist im ein- und ausfahrbaren Längsteleskoparm 51 des ersten Tragarms 51 ein Spindelantrieb 511 und im ein- und ausfahrbarer Querteleskoparm 52 an dessen Kopfende ein Spindelantrieb 521 gezeigt. Ferner ist im einund ausfahrbaren Längsteleskoparm 61 des zweiten Tragarms 61 ein Spindelantrieb 611 und im ein- und ausfahrbarer Querteleskoparm 62 an dessen Kopfende ein Spindelantrieb 621 gezeigt. Mit den Spindelantrieben 511,611 können die Querteleskoparme 52,62 unter den Achsen eines Fahrzeuges positioniert werden, während die Spindelantriebe 521,621 ein Ein- und Ausfahren der Stützbolzenpaare 54, 55 57, 58 und 64, 65 67, 68 der Greifeinheiten 53,56 und 63,66 an den kopfseitigen Enden der Querteleskoparme 52 und 62 ermöglichen. Schließlich zeigt Figur 5 weitere Spindelantriebe 4310, 4320, 4330, 4340, welche an den Seiten 411, 412, 413, 414 angeordnet sind und womit eine Freigabe bzw. Verriegelung der steuerbaren Verschlußmittel 431, 432, 433, 434 möglich ist.

Die oben beschriebene dynamische Prüfeinrichtung ist besonders vorteilhaft für die Überprüfung eines Kippsicherungssystems ("ESP-Einrichtung") in einem Kraftfahrzeug einsetzbar. Bevorzugt ist damit die Funktionsfähigkeit der Sensoren eines Kippsicherungssystems überprüfbar. Prüfstände, welche eine derartige dynamische Prüfeinrichtung enthalten, sind insbesondere in eine automatische Fertigungseinrichtung für Kraftfahrzeuge zur automatischen Überprüfung eines Kippsicherungssystems für die dort produzierten Kraftfahrzeuge integrierbar.

Es besteht auch die Möglichkeit, eine erfindungsgemäße dynamische Prüfeinrichtung in einen Mehrfachprüfstand zu integrieren, in dem zusätzlich zur Überprüfung eines Kippsicherungssystems in einem Kraftfahrzeug weitere Komponenten des Kraftfahrzeuges geprüft werden. So ist eine Kombination mit einer Rollenprüfvorrichtung möglich, bei der insbesondere die Bremsen und das Antiblockiersystem eines Fahrzeuges geprüft werden. In der Ausführung gemäß Figur 2 könnten in einem solchen Fall die Förderbänder 21,22 ein Bestandteil der Rollenprüfvorrichtung im Mehrfachprüfstand sein.

Schließlich bietet die Erfindung den besonderen Vorteil, daß eine dynamische Prüfeinrichtung der oben beschriebenen Art an nahezu einer beliebigen Stelle in die Linie der Montageeinrichtungen einer Fertigungslinie für Kraftfahrzeuge integrierbar ist. Es muss lediglich gewährleistet sein, dass zumindest das Fahrwerk des Fahrzeugs einschließlich der Räder vollständig montiert ist. Der Ausbau der Innenraumes des Fahrzeuges, wie z.B. die Sitzmontage, und weitere Arbeiten auf den Außenseiten des Fahrzeuges, wie z.B. die Montage von Außenscheiben, Beleuchtungsanlagen und vielem mehr können auch in nachfolgenden Montageeinrichtungen einer Fertigungslinie erfolgen.

Bei einer anderen Ausführung der Erfindung kann die dynamische Prüfeinrichtung auch am Ende in der Linie der Montageeinrichtungen einer Fertigungslinie angeordnet sein, d.h. in einem sogenannten Prüf- oder Finishbereich, in dem eine Endkontrolle der fertig produzierten Fahrzeuge stattfindet. Nach einem Durchlauf der erfindungsgemäßen dynamischen Prüfeinrichtung werden die geprüften Fahrzeuge endgültig aus der Montagelinie ausgefördert und gegebenenfalls einzelnen Montagezellen zugeführt. In diesen werden Nacharbeiten ausgeführt, die z.B. zur Behebung von Mängeln dienen, welche in einem Prüf- oder Finishbereich detektiert wurden.

## Patentansprüche

1. Dynamische Prüfeinrichtung für ein Fahrzeug (8), mit
a) einem Traggestell (3), wobei die Abmessungen (31) des Traggestells (3) in Richtung einer Querachse (y) des Fahrzeuges kleiner sind als dessen Radabstand, und
b) einer steuerbare Verstelleinrichtung (7) für das Traggestell (3,4), die aufweist
b1) erste Mittel (71a,71b,71c), welche das Traggestell (3,4) von unten an das Fahrzeug (8) einfahren, dieses in eine angehobene Prüfposition bringen und nach Ablauf einer Prüfung wieder absetzen,
b2) zweite Mittel, welche so auf das Traggestell (3,4) einwirken, daß das in einer angehobenen Prüfposition befindliche Fahrzeug (8) kurzzeitig in mindestens einer von der horizontalen Lage abweichende Lage (Nx,Ny) positioniert ist, und
b3) dritte Mittel (73), welche so auf das Traggestell (3) einwirken, daß das in einer angehobenen Prüfposition befindliche Fahrzeug (8) kurzzeitig um eine Vertikalachse (z) gedreht wird.

2. Dynamische Prüfeinrichtung nach Anspruch 1, wobei die Winkelgeschwindigkeiten des Übergangs von einer horizontalen in mindestens eine davon abweichende Lage und/oder der Drehung um eine Vertikalachse (z) vorgebbar sind.

3. Dynamische Prüfeinrichtung nach Anspruch 1 oder 2, wobei das Traggestell (3) ein zentrales Tragteil (4) aufweist, worauf die steuerbare Verstelleinrichtung (7) entlang einer Vertikalachse (z) von unten einwirkt.

4. Dynamische Prüfeinrichtung nach einem der Ansprüche 3, **dadurch gekennzeichnet, daß** das zentrale Tragteil (4) ein unteres und ein oberes Rahmenteil (421,422) aufweist, welche mit steuerbaren Verschlußmitteln (431,432,433,434) so miteinander verbindbar sind, daß eine Kippung des oberen Rahmenteiles entlang einer Längs- oder Querachse (x,y) des Fahrzeuges (8) möglich ist.

5. Dynamische Prüfeinrichtung nach Anspruch 4, mit einer Hubeinheit (74c), welche zwischen dem unteren und oberen Rahmenteil (421,422) des zentralen Tragteils (4) angeordnet ist.

6. Dynamische Prüfeinrichtung nach Anspruch 3, mit einem ersten und/oder zweiten Tragarm (5,6), der von einer Stirnseite (411,412) des zentralen Tragteils (4) ausgeht und sich entlang einer Längsachse (x) des Fahrzeuges (8) erstreckt.

7. Dynamische Prüfeinrichtung nach Anspruch 4 oder 5, mit einem ersten und/oder zweiten Tragarm (5,6), der von einer Stirnseite (411,412) des oberen Rahmenteiles (422) des zentralen Tragteils (4) ausgeht und sich entlang einer Längsachse (x) des Fahrzeuges (8) erstreckt.

8. Dynamische Prüfeinrichtung nach Anspruch 6 oder 7, wobei der erste und/oder zweite Tragarm (5,6) jeweils einen entlang einer Längsachse (x) des Fahrzeuges (8) ein- und ausfahrbaren Längsteleskoparm (51,61) aufweist.

9. Dynamische Prüfeinrichtung nach Anspruch 6, 7 oder 8, wobei der erste und/oder zweite Tragarm (5,6) jeweils einen entlang einer Querachse (y) des Fahrzeuges (8) ein- und ausfahrbaren Querteleskoparm (52,62) aufweist.

10. Dynamische Prüfeinrichtung nach einem der vorangegangenen Ansprüche, wobei das Traggestell (3) Greifeinheiten (53,56,63,66) aufweist, die jeweils einem Rad (81,82) des Fahrzeugs zugeordnet sind und darauf zumindest zur Plazierung des Fahrzeugs (8) in einer angehobenen Position eingreifen.

11. Dynamische Prüfeinrichtung nach Anspruch 10, wobei die Greifeinheiten (53,56,63,66) aus- und einfahrbare Stützbolzen (54,55;57,58;64,65;67,68) aufweisen, welche für den ersten Schritt entlang der Querachse (y) des Fahrzeuges derart ausfahrbar sind, daß diese die Räder (81,82) des Fahrzeugs (8) untergreifen.

12. Dynamische Prüfeinrichtung nach Anspruch 11, wobei an einer Greifeinheit (53) ein Paar von Stützbolzen (54,55) angeordnet und einem Rad (81) des Fahrzeugs (8) zugeordnet ist.

13. Prüfstand mit einer dynamischen Prüfeinrichtung nach einem der vorangegangenen Ansprüche, wobei deren steuerbare Verstelleinrichtung (7) ein Fahrzeug (8) vollautomatisch in eine angehobene Prüfposition bringt, kurzzeitig in mindestens einer von der horizontalen Lage abweichende Lage (Nx,Ny) positioniert, kurzzeitig um eine Vertikalachse (z) dreht und das Fahrzeug wieder absetzt.

14. Prüfstand nach Anspruch 13, mit einer automatischen Fördereinrichtung (2) für ein Fahrzeug (8), womit das Fahrzeug (8) zur dynamischen Prüfeinrichtung hingeführt, dort plaziert und nach Ablauf einer Prüfung wieder weggeführt wird.

15. Prüfstand nach Anspruch 14 oder 15, wobei die Fördereinrichtung (2) zwei parallele Förderbänder (21,22) aufweist, auf denen ein Fahrzeug (8) über dessen Räder (81,82) ruht, und die dynamische Prüfeinrichtung (3) im Raum (11) zwischen den Förderbänder (21,22) angeordnet ist.

16. Prüfstand nach Anspruch 15, wobei die dynamische Prüfeinrichtung in einer Montageebene (1) zwischen den parallelen Förderbändern (21,22) versenkbar ist.

17. Verwendung einer dynamischen Prüfeinrichtung nach einem der Ansprüche 1 bis 12 für die Überprüfung eines Kippsicherungssystems ("ESP-Einrichtung") in einem Kraftfahrzeug, insbesondere der Sensoren eines Kippsicherungssystems.

18. Verwendung eines Prüfstandes nach einem der Ansprüche 13 bis 16 in einer Fertigungseinrichtung für Kraftfahrzeuge zur automatischen Überprüfung eines Kippsicherungssystems ("ESP-Einrichtung") in einem Kraftfahrzeug, insbesondere der Sensoren eines Kippsicherungssystems.

19. Verwendung einer dynamischen Prüfeinrichtung nach einem der Ansprüche 1 bis 12 in einem Mehrfachprüfstand, in dem zusätzlich zur Überprüfung eines Kippsicherungssystems ("ESP-Einrichtung") in einem Kraftfahrzeug weitere Komponenten des Kraftfahrzeuges geprüft werden.

20. Fertigungslinie für Fahrzeuge mit Montageeinrichtungen, **dadurch gekennzeichnet, daß** eine dynamische Prüfeinrichtung für ein Fahrzeug nach einem der Ansprüche 1 bis 12 in die Linie der Montageeinrichtungen der Fertigungslinie integriert ist.

21. Fertigungslinie für Fahrzeuge mit Montageeinrichtungen, **dadurch gekennzeichnet, daß** eine dynamische Prüfeinrichtung für ein Fahrzeug nach einem der Ansprüche 1 bis 12 am Ende der Linie der Montageeinrichtungen der Fertigungslinie angeordnet ist.

## Claims

1. Dynamic test fixture for a vehicle (8), having:
a) a support frame (3) whose dimensions (31) in a direction of a transverse axis (y) of the vehicle are smaller than a distance between wheels of the vehicle, and
b) a controllable adjusting device (7) for the support frame (3, 4), comprising:
b1) first means (71a, 71b, 71c) which move the support frame (3, 4) from below towards the vehicle (8), lift the vehicle into a raised testing position, and lower it again after completion of a test,
b2) second means configured to act on the support frame (3, 4) in such a way that the vehicle (8), when situated in the raised testing position, is moved, briefly, into at least one position (Nx, Ny) that deviates from the horizontal position, and
b3) third means (73) configured to act on the support frame (3) in such a way that the vehicle (8), when situated in the raised testing position, is briefly rotated around a vertical axis (z) briefly.

2. Dynamic test fixture according to Claim 1, wherein the angular velocities of the transition from a horizontal position into at least one position deviating from this and/or the rotation around a vertical axis (z) can be pre-set.

3. Dynamic test fixture according to Claim 1 or 2, wherein the support frame (3) comprises a central support section (4), on which the controllable adjusting device (7) acts from below along a vertical axis (z).

4. Dynamic test fixture according to Claim 3, **characterised in that** the central support section (4) comprises a lower frame and an upper frame (421, 422), which are interconnected using controllable closing devices (431, 432, 433, 434) in such a way that the upper frame is capable of being tilted along a longitudinal or transverse axis (x, y) of the vehicle (8).

5. Dynamic test fixture according to Claim 4, having a lift unit (74c) that is arranged between the lower frame and the upper frame (421, 422) of the central support section (4).

6. Dynamic test fixture according to Claim 3, having a first and/or a second support arm (5, 6) that extends from a front face (411, 412) of the central support section (4) along a longitudinal axis (x) of the vehicle (8).

7. Dynamic test fixture according to Claim 4 or 5, having a first and/or a second support arm (5, 6) that extends from a front face (411, 412) of the upper frame (422) of the central support section (4) along a longitudinal axis (x) of the vehicle (8).

8. Dynamic test fixture according to Claim 6 or 7, wherein the first and/or second support arm (5, 6) in each case comprises a longitudinal telescoping arm (51, 61) that is capable of being extended and retracted along a longitudinal axis (x) of the vehicle (8).

9. Dynamic test fixture according to Claim 6, 7 or 8, wherein the first and/or second support arm (5, 6) in each case comprises a transverse telescoping arm (52, 62) that is capable of being extended and retracted along a transverse axis (y) of the vehicle (8).

10. Dynamic test fixture according to one of the preceding claims, wherein the support frame (3) comprises gripping units (53, 56, 63, 66), each of which is assigned to a wheel (81, 82) of the vehicle and engages thereon to at least move the vehicle (8) into a raised position.

11. Dynamic test fixture according to Claim 10, wherein the gripping units (53, 56, 63, 66) comprise support pins (54, 55; 57, 58; 64, 65; 67, 68) that are capable of being extended and retracted and that in the first step extend along the transverse axis (y) of the vehicle in such a way that they contact an underside of the wheels (81, 82) of the vehicle (8).

12. Dynamic test fixture according to Claim 11, wherein a pair of support pins (54, 55) is arranged on a gripping unit (53) and is assigned to a wheel (81) of the vehicle (8).

13. Test stand with a dynamic test fixture according to one of the preceding claims, wherein the controllable adjusting device (7) of the latter brings a vehicle (8) fully automatically into a raised testing position, places it briefly into at least one position (Nx, Ny) that deviates from the horizontal position, rotates it briefly around a vertical axis (z) and lowers the vehicle again.

14. Test stand according to Claim 13, having an automatic conveyance device (2) for a vehicle (8), wherein the vehicle (8) is moved to the dynamic test fixture, placed there, and removed again after completion of a test.

15. Test stand according to Claim 14 or 15, wherein the conveyance device (2) comprises two parallel conveyor belts (21, 22) upon which the wheels (81, 82) of a vehicle (8) rest, and the dynamic test fixture (3) is arranged in the space (11) between the conveyor belts (21, 22).

16. Test stand according to Claim 15, wherein the dynamic test fixture can be lowered into an assembly plane (1) between the parallel conveyor belts (21, 22).

17. Use of a dynamic test fixture according to one of Claims 1 to 12 for testing a stabilising system ("ESP device") of a motor vehicle, in particular the sensors of a stabilising system.

18. Use of a dynamic test stand according to one of Claims 13 to 16 in an assembling device for motor vehicles for automatic testing of a stabilising system ("ESP device") of a motor vehicle, in particular the sensors of a stabilising system.

19. Use of a dynamic test fixture according to one of Claims 1 to 12 in a multiple test stand, in which in addition to testing a stabilising system ("ESP device") of a motor vehicle, other components of the vehicle are tested.

20. Assembly line for vehicles with assembling devices, **characterised in that** a dynamic test fixture for a vehicle according to one of Claims 1 to 12 is integrated into the line of assembling devices of the assembly line.

21. Assembly line for vehicles with assembling devices, **characterised in that** a dynamic test fixture for a vehicle according to one of Claims 1 to 12 is arranged at the end of the line of assembling devices of the assembly line.

## Revendications

1. Dispositif d'essai dynamique pour un véhicule (8), comprenant
a) un bâti (3) porteur, les dimensions (31) du bâti (3) porteur dans la direction d'un axe (y) transversal du véhicule étant inférieures à l'empattement de ce dernier, et
b) un équipement (7) de déplacement réglable pour le bâti (3, 4) porteur, qui comporte
b1) des premiers moyens (71a, 71b, 71c) qui rentrent le bâti (3, 4) porteur par le dessous contre le véhicule (8), amènent ce dernier dans une position d'essai soulevée et le déposent à nouveau une fois l'essai achevé,
b2) des deuxièmes moyens, qui agissent sur le bâti (3, 4) porteur de telle sorte que le véhicule (8) se trouvant dans une position d'essai soulevée est temporairement positionné dans au moins une position (Nx, Ny) différant de la position horizontale, et
b3) des troisièmes moyens (73), qui agissent sur le bâti (3) porteur de telle sorte que le véhicule (8) se trouvant dans une position d'essai soulevée est temporairement tourné autour d'un axe (z) vertical.

2. Dispositif d'essai dynamique suivant la revendication 1, suivant lequel les vitesses angulaires de la transition d'une position horizontale dans au moins une position différant de celle-ci, et/ou de la rotation autour d'un axe (z) vertical, peuvent être prescrites.

3. Dispositif d'essai dynamique suivant la revendication 1 ou 2, suivant lequel le bâti (3) porteur comporte un élément (4) porteur central, sur lequel l'équipement (7) de déplacement réglable agit par le dessous le long d'un axe (z) vertical.

4. Dispositif d'essai dynamique suivant l'une des revendications 1 à 3, suivant lequel l'élément (4) porteur central comporte une partie (421) de cadre inférieure et une partie (422) de cadre supérieure qui, par des moyens (431, 432, 433, 434) de fermeture asservissables, peuvent être mutuellement assemblées de telle sorte que la partie de cadre supérieure peut basculer le long d'un axe longitudinal (x) ou transversal (y) du véhicule (8).

5. Dispositif d'essai dynamique suivant la revendication 4, comportant une unité (74c) de levage qui est disposée entre la partie (421) de cadre inférieure et la partie (422) de cadre supérieure de l'élément (4) porteur central.

6. Dispositif d'essai dynamique suivant la revendication 3, comportant un premier bras (5) porteur et/ou un deuxième bras (6) porteur, qui part d'un côté (411, 412) frontal de l'élément (4) porteur central et s'étend le long d'un axe (x) longitudinal du véhicule (8).

7. Dispositif d'essai dynamique suivant la revendication 4 ou 5, comportant un premier bras (5) porteur et/ou un deuxième bras (6) porteur, qui part d'un côté (411, 412) frontal de la partie (422) de cadre supérieure de l'élément (4) porteur central et s'étend le long d'un axe (x) longitudinal du véhicule (8).

8. Dispositif d'essai dynamique suivant la revendication 6 ou 7, suivant lequel le premier bras (5) porteur et/ou le deuxième bras (6) porteur comporte respectivement un bras (51, 61) télescopique longitudinal pouvant être rentré et déployé le long d'un axe (x) longitudinal du véhicule (8).

9. Dispositif d'essai dynamique suivant la revendication 6, 7 ou 8, suivant lequel le premier bras (5) porteur et/ou le deuxième bras (6) porteur comporte respectivement un bras (52, 62) télescopique transversal pouvant être rentré et déployé le long d'un axe (y) transversal du véhicule (8).

10. Dispositif d'essai dynamique suivant l'une des revendications précédentes, suivant lequel le bâti (3) porteur comporte des unités (53, 56, 63, 66) de préhension qui sont respectivement associées à une roue (81, 82) du véhicule et agissent sur elle au moins pour le placement du véhicule (8) dans une position soulevée.

11. Dispositif d'essai dynamique suivant la revendication 10, suivant lequel les unités (53, 56, 63, 66) de préhension comportent des goujons (54, 55 ; 57, 58 ; 64, 65 ; 67, 68) de soutien pouvant être déployés et rentrés, qui pour la première étape peuvent être déployés le long de l'axe (y) transversal du véhicule de telle sorte qu'ils s'engagent sous les roues (81, 82) du véhicule (8).

12. Dispositif d'essai dynamique suivant la revendication 11, suivant lequel une paire de goujons (54, 55) de soutien est disposée sur une unité (53) de préhension et est associée à une roue (81) du véhicule (8).

13. Banc d'essai équipé d'un dispositif d'essai dynamique suivant l'une des revendications précédentes dont l'équipement (7) de déplacement asservissable amène un véhicule (8) de façon entièrement automatisée dans une position d'essai soulevée, le positionne temporairement dans au moins une position (Nx, Ny) différant de la position horizontale, le tourne temporairement autour d'un axe (z) vertical, et abaisse à nouveau le véhicule.

14. Banc d'essai suivant la revendication 13, comprenant un équipement (2) de transport automatisé pour un véhicule (8), par lequel le véhicule (8) est apporté au dispositif d'essai dynamique, y est mis en place, puis en est évacué une fois l'essai achevé.

15. Banc d'essai suivant la revendication 13 ou 14, suivant lequel l'équipement (2) de transport comporte deux bandes (21, 22) transporteuses parallèles, sur lesquelles un véhicule (8) repose par ses roues (81, 82), et le dispositif (3) d'essai dynamique est disposé dans l'espace (11) entre les bandes (21, 22) transporteuses.

16. Banc d'essai suivant la revendication 15, suivant lequel le dispositif d'essai dynamique peut être escamoté dans un plan (1) de montage entre les bandes (21, 22) transporteuses parallèles.

17. Utilisation d'un dispositif d'essai dynamique suivant l'une des revendications 1 à 12 pour le contrôle d'un système stabilisateur (« dispositif ESP », encore appelé « régulation de comportement dynamique ESP ») dans un véhicule automobile, notamment des capteurs d'un système stabilisateur.

18. Utilisation d'un banc d'essai suivant l'une des revendications 13 à 16 dans une installation de fabrication de véhicules automobiles pour le contrôle automatisé d'un système stabilisateur (« dispositif ESP ») dans un véhicule automobile, notamment des capteurs d'un système stabilisateur.

19. Utilisation d'un dispositif d'essai dynamique suivant l'une des revendications 1 à 12 dans un banc d'essai multiple dans lequel, en plus du contrôle d'un système stabilisateur (« dispositif ESP ») dans un véhicule automobile, on contrôle d'autres composants du véhicule automobile.

20. Chaîne de fabrication de véhicules pourvue d'équipements de montage, **caractérisée en ce qu'**un dispositif d'essai dynamique pour un véhicule suivant l'une des revendications 1 à 12 est intégré dans la ligne d'équipements de montage de la chaîne de fabrication.

21. Chaîne de fabrication de véhicules pourvue d'équipements de montage, **caractérisée en ce qu'**un dispositif d'essai dynamique pour un véhicule suivant l'une des revendications 1 à 12 est disposé à la fin de la ligne d'équipements de montage de la chaîne de fabrication.
